# EUROPEAN PATENT APPLICATION

(11) **EP 0 743 338 A1**
(43) Date of publication of application: **20.11.1996**
(21) Application number: 96107700.5
(22) Date of filing: 14.05.1996
(51) Int. Cl.: C08K 11/00, C08J 3/24

(54) **Composite having excellent dynamic characteristics, migration characteristics or both characteristics and process for producing the same**

(30) Priority: 15.05.1995 JP 139908/95; 16.05.1995 JP 141113/95
(71) Applicant: NIPPON OIL COMPANY, LTD., Tokyo 105 (JP)
(72) Inventor: Sasaki, Makoto, c/o Nippon Oil Co., Ltd., Naka-ku, Yokohama 231 (JP); Kobayashi, Yukio, c/o Nippon Oil Co., Ltd., Naka-ku, Yokohama 231 (JP); Haji, Katsuhiko, c/o Nippon Oil Co., Ltd., Naka-ku, Yokohama 231 (JP)
(74) Representative: Hansen, Bernd, Dr. Dipl.-Chem.

(57) **Abstract**

Disclosed are a composite having excellent dynamic characteristics obtained by conducting curing treatment of a composition comprising electric field-susceptible particles and a matrix having a curing property while applying an electric field to the composition, and a composite having excellent dynamic characteristics, migration characteristics or both characteristics obtained by by conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles and a matrix having a curing property while applying both an electric field and a magnetic field to the composition.

## Description

### BACKGROUND OF THE INVENTION

### 1) Field of the Invention

The present invention relates to a composite having excellent dynamic characteristics such as strength and elastic modulus, migration characteristics of heat, electric charge, etc., or both characteristics and a process for producing the same.

### 2) Prior Art

In polymeric materials which are used for structure parts in automobiles, airplanes, buildings, various machinery equipments, various electric machines and electric appliances, etc., high strength and high elastic modulus are required, so that in materials composed of only polymeric matrix, mechanical strength is insufficient. Thus, in order to improve mechanical strength thereof, it has been widely conducted to incorporate a filler such as silica particles, titanium oxide, etc., into the polymeric matrix. In the composite thus produced, dynamic strength such as strength, elastic modulus, etc., have been improved to some degree.

Recently, the polymeric materials used for the above-mentioned purposes are employed under severer conditions, and requirements for the materials also have become more exacting than hitherto. Thus, there is a problem that the prior art composites dispersed particles in a matrix having a curing property cannot sufficiently satisfy required dynamic characteristics.

Further, there are known also composites using for elements of electric machine and electric appliances, in which magnetism, electrical conductivity, piezo-electricity, thermal conductivity, etc., have been imparted by mixing magnetic particles, electrically conductive particles, piezo-electric particles, thermoconductive particles, etc., in a plymeric matrix.

However, requirements also for characteristics of the composites used for the above-mentioned purposes have become more exacting than hitherto. Thus, there is a problem that migration velocity of heat, electric charge, etc., is not sufficient or direction of migration cannot be precisely controlled.

### SUMMARY OF THE INVENTION

In the light of prior art problems, an object of the present invention is to provide a novel composite having excellent dynamic characteristics such as strength and elastic modulus, migration characteristics of heat or electric charge or both characteristics and a process for producing the same.

As a result of extensive studies to solve the problems, the present inventors have found that a composite obtained by conducting curing treatment of a composition comprising electric field-susceptible particles and a matrix having a curing property while applying an electric field to the composition, has excellent dynamic characteristics, and furthermore a composite obtained by conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles has further excellent dynamic characteristics, migration characteristics of heat or electric charge or both characteristics, and have established the present invention.

That is, according to a first aspect of the present invention, there is provided a composite having excellent dynamic characteristics obtained by conducting curing treatment of a composition comprising electric field-susceptible particles and a matrix having a curing property while applying an electric field to the composition.

According to a second aspect of the present invention, there is provided a process for producing a composite having excellent dynamic characteristics which comprises conducting curing treatment of a composition comprising electric field-susceptible particles and a matrix having a curing property while applying an electric field to the composition, and thereby producing the composite.

According to a third aspect of the present invention, there is provided a composite having excellent dynamic characteristics, migration characteristics or both characteristics obtained by conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles and a matrix having a curing property while applying both an electric field and a magnetic field to the composition.

According to a fourth aspect of the present invention, there is provided a process for producing a composite having excellent dynamic characteristics, migration characteristics or both characteristics which comprises conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles and a matrix having a curing property while applying both an electric field and a magnetic field to the composition, and thereby producing the composite.

### DETAILED DESCRIPTION OF THE INVENTION

The present invention will be described in detail below.

### (1) At the beginning, the first and second aspects of the present invention will be described below.

The term "electric-field susceptible particles " used herein means "particles which electrically polarize upon application of an electric field and effects to increase the viscosity of an electrorheological fluid used the particles, i.e., electrorheological effects are provided"

The term "etectrorheological fluid" used herein means "a suspension comprising an electrically insulating fluid and inorganic or polymeric particles dispersed therein, whose viscosity is drastically increased upon application of an electric field".

When an electric field is applied to the electrorheological fluid, an electrical deviation takes place on the surfaces of the dispersed electric field-susceptible particles and the dispersed particles are aligned by an electrostatic force to form a bridge of dispersed particles. Thus, the viscosity of the fluid is increased. The phenomenon wherein the viscosity is increased is called "electrorheological effects".

The electric field-susceptible particles include known particles used in the electrorheological fluid and more specifically inorganic particles including silica, zeolite, titanium oxide, barium titanate, etc., organic particles including ion exchange resin, starch, gelatin, cellulose, arginic acid, glucose derivatives, sodium polyacrylate, resol-type phenol resin, polyaniline, sulfonated polystyrene, etc., carbonaceous particles including pitch particles obtained from petroleums or coals, etc., and furthermore electrically conductive particles, e.g., metal particles whose surfaces are coated with an insulating layer, among which titanium oxide as inorganic particles or carbonaceous particles are preferable and particularly surface oxidation-treated carbonaceous particles among the carbonaceous particles are more preferable.

The electric field-susceptible particles have preferably particle sizes of 0.01 to 5,000 µm and more preferably 1.0 to 2,000 µm. When the particles size is below 0.01 µm, no more satisfactory improvement of dynamic characteristics can be ensured, whereas above 5,000 µm it is not preferable since the composite obtained becomes brittle.

The matrix having a curing property includes substances which are curable by interior factors such as heat, light, etc., substances which are curable by mixing reactive two liquids, substances which are curable by adding a catalyst, etc., and specifically epoxy resins having a curing property (hereinafter, referred to "curing resins"), curing phenol resins, reactive silicones, curing urethane resins, unsaturated polyester resins, etc.

The curing epoxy resins, which are curable with a polyamine catalyst, can be obtained, for example, by reacting bisphenol with epichlorohydrin. Examples of the curing epoxy resins include the trademarks Epicoat 828, Epicoat 1001, Epicoat 1004, Epicoat 1007 and Epicoat 1009, made by Yuka Shell Epoxy Co., Ltd, etc.

The curing phenol resins can be obtained by condensation reaction of phenol and formaldehyde.

Examples of the curing phenol resins include condensation products between phenol and formaldehyde, condensation products between p-tert-butylphenol and formaldehyde, etc.. The curing phenol resins are cured by heating in the absence of catalyst or in the presence of an amine compound such as texamethylene tetramine.

The reactive silicone has a reactive group(s) at the terminal of silicone skeleton. The combinations of two kinds of reactive silicone including a combination of silicone having an alcohol group as the terminal group and silicone having an alkoxy group as the terminal group, a combination of silicone having a vinyl group as the terminal group and silicone having a hydrogen group as the terminal group, etc., are often employed. The curing reaction occurs in the presence of a catalyst such as platinum, so that the crosslinking structure is formed.

The curing urethane resins are cured products of a mixture of a polyisocyanate such as tolylenediisocyanate with a compound having active hydrogen, which result in polyurethanes. Examples of the compound having active hydrogen include polyols including pentaerythritol, polyamines including ethylenediamine, etc.

The unsaturated polyester resins are curing resins produced by esterification reaction between unsaturated polybasic acid anhydride such as maleic anhydride or unsaturated polybasic acid such as maleic acid and polyol such as diethyleneglycol, which are curable in a radical reaction by heating alone or in the presence of an unsaturated monomer such as styrene.

Further, as the matrix having a curing property, thermoplastic resins also in a fluidified state at a high temperature and in a solid state at room temperature may be used. Examples of the thermoplastic resins include polyethylene, polypropylene, polystyrene, etc. In such case, it is necessary to apply an electric field at a higher temperature than that at which the resin becomes a fluidified state.

The matrix having a curing property is not limited to the scope of organic substance and inorganic matrix also may be used.

The amount of the electric field-susceptible particles to the matrix having a curing property is preferably 1 to 99% by weight, more preferably 3 to 90% by weight and most preferably 5 to 80% by weight. When the amount is below 1% by weight, no effects due to addition of the electric field-susceptible particles are provided, whereas above 99% by weight it is not preferable since the matrix becomes brittle.

As a method for curing treatment of the composition comprising electric field-susceptible particles and a matrix having a curing property, for example, a method for curing treatment using a parallel flat plate electrode cell which is capable of enclosing the composition, can be applied.

The composition is enclosed in the cell and then the cell is sealed. Then, one member of curing treatment selected from the group consisting of heat curing treatment, photo-curing treatment, two-liquid mix curing treatment and catalytic curing treatment is conducted for the composition thus enclosed while applying an electric field to the composition, whereby the intended composite is produced.

When the matrix having a curing property has a heat curing property, the composition is heated during application of an electric field to cure.

Moreover, when the matrix having a property is a two-liquid mix curing type or a catalytic curing type, the composition is prepared by mixing and then immediately enclosed in the cell and then the cell is sealed to apply an electric field. Finally, when the curing treatment has been completed, the application of the electric field is stopped, thus obtaining the intended composite.

When the matrix having a curing property is thermoplastic, the composition is heated to the temperature at which a fluidified state is maintained and enclosed in the cell and then the cell is sealed. After enclosing the composition in the cell, an electric field is applied so that the fluidified state may be maintained. Then, the cell is cooled, and when the composition has become a solid state, the application of the electric field is stopped, thus obtaining the intended composite.

Regarding application conditions of the electric field, an electric field of 50 V/mm to 50kV/mm, preferably of 100 V/mm to 30 kV/mm is applied. When the electric field is below 50 V/mm, the particles are not aligned and thus improvement of dynamic characteristics cannot be expected, whereas above 50 kV/mm there is a fear causing dielectric breakdown.

In the present invention, it is necessary to conduct heat curing treatment or photo-curing treatment, etc., of the composition comprising particles which are susceptible to an electric field and electrically polarize in the electric field and a matrix having curing property while applying an electric field to the composition. In the following cases, the composite having excellent dynamic characteristics of the present invention cannot be obtained.
① Only application treatment of an electric field is conducted without conducting heat treatment, photo-treatment, etc.
② Application treatment of an electric field is conducted and then heat treatment, or photo-treatment, etc., is conducted.
③ Heat treatment, photo-treatment, etc., is conducted and then application treatment of an electric field is conducted.

In order to promote alignment of the electric field-susceptible particles which occurs by application of an electric field, a small amount of water may be added to the composition. Further, other additives, e.g, amine curing agents, etc., can be used, if necessary.

The composite of the present invention is cured in the state in which the electric field-susceptible particles have been dispersed in the matrix having a curing property or in the state in which the matrix having a curing property has coated surfaces of the electric field-susceptible particles.

It is considered that dynamic characteristics of the composite of the present invention are improved from the reason that electrical deviation, i.e., electrical polarization takes place on the surfaces of the electric field-susceptible particles by application of an electric field and the particles are aligned by an electrostatic attractive force to form a bridge of the particles and the bridge thus formed is fixed in the matrix having a curing property.

### (2) Next, the third and fourth aspects of the present invention will be described below.

The terms "electric-field susceptible particles" and "electrorheological effects" are the same as defined in the above paragraph (1).

The species and particle sizes of the electric field-susceptible particles also are the same as described in the above paragraph (1).

The term "magnetic field-susceptible particles " used herein means "magnetic particles having a property intensively attractive to, for example, a magnet", among which particularly ferromagnetic particles are preferable.

Examples of the magnetic field-susceptible particles include magnetic particles of oxides including magnetite, manganese ferrite, barium ferrite, etc.; magnetic particles of metals including iron, cobalt, nickel, permalloy, etc.,; particles of iron nitride, etc., and furthermore compounds of rare earth metals including samarium, neodymium, cerium, etc.

Also when a magnetic field is applied to a suspension of a fluid and the above-mentioned magnetic field-susceptible particles dispersed therein, the phenomena wherein the viscosity of the fluid is increased is observed. Also in this case, it is considered that the dispersed particles are aligned by the magnetic force to form a bridge of dispersed particles, and thus the viscosity of the fluid is increased.

The magnetic field-susceptible particles preferably have particle sizes of 0.003 to 5,000 µm and more preferably 1.0 to 2,000 µm. When the particle sizes are below 0.003 µm, no more satisfactory improvement of dynamic characteristics, migration characteristics of heat or electric charge or both characteristics can be ensured, whereas above 5,000 µm it is not preferable since the composite obtained becomes brittle.

The term "both electric field-and magnetic-field susceptible particles" used herein means "particles having both properties of particles used in an electrorheological fluid which electrically polarize upon application of an electric field and properties of magnetic particles intensively attractive to a magnet".

Example of the both electric field- and magnetic field-susceptible particles includes composite particles having an electric field-susceptible portion and a magnetic field-susceptible portion. The forms of the composite particles include a form in which surfaces of magnetic field-susceptible particles have been coated with electric field-susceptible particles and a form in which magnetic field-susceptible particles have been dispersed in electric field-susceptible particles.

Such composite particles can be prepared,for example, in the following manner:

The first procedure comprises dispersing ferromagnetic particles in a solution of metal alkoxide, for example, tetrabutoxytitanium, then conducting a sol-gel reaction in the presence of the ferromagnetic particles, and thereby producing composite particles in which metal oxide, e.g., titanium oxide has coated the surfaces of the ferromagnetic particles.

The second procedure comprises dispersing ferromagnetic particles into an aqueous solution containing a component providing an electrorheological effect, for example, an aqueous solution of sodium polyacrylate, then separating sodium polyacrylate having ferromagnetic particles dispersed therein by reprecipitation, or the like, followed by drying and pulverization, thus producing composite particles.

The third procedure comprises conducting emulsion or suspension polymerization of a raw material for the component providing an electrorheological effect, for example, sodium polyacrylate in the presence of ferromagnetic particles, thereby fixing a layer of sodium polyacrylate on the surfaces of ferromagnetic particles, thus producing composite particles.

In the foregoing procedures, raw materials for the ferromagnetic particles, for example, sulfates, carbonyl compounds, etc., can be used instead of the ferromagnetic particles, to form ferromagnetic particles in the course of preparing composite particles. Composite particles can be prepared according to any other known procedure than the above-mentioned ones.

Further, example of the both electric field- and magnetic field-susceptible particles includes particles in which surfaces of electrically conductive magnetic particles have been coated with an insulating layer.

As methods for coating conductive ferromagnetic particles with an electrically insulating layer, for example, known methods for coating including solution of powder coating, vapor deposition, surface polymerization, surface reaction, etc., are applied.

The electrically insulating layer for use in the present invention includes synthetic high molecular compounds such as polyethylene, polystyrene, polymethylacrylate, etc., natural high molecular compounds such as wax, asphalt, drying oil varnish, etc., and inorganic compounds such as silica, alumina, rutile, etc.

In order to increase an adhesive strength between conductive ferromagnetic dispersion particles and an electrically insulating layer, the surfaces of the conductive ferromagnetic dispersion particles may be subjected to etching treatment, coupling agent treatment or anchorcoat treatment.

The method also which comprises beginning polymerization of a monomer capable of forming an electrically insulating layer on surfaces of electrically conductive ferromagnetic dispersion particles to chemically bond the electrically conductive ferromagnetic dispersion particles with the electrically insulating layer is effectively used.

Moreover, the method also which comprises forming an insulating oxidized layer by oxidation of electrically conductive ferromagnetic dispersion particles or an insulating nitrided layer by nitridation of electrically conductive ferromagnetic dispersion particles is simple and preferable.

The electrical resistance of the electrically insulating layer is preferably 10⁸ Ω cm or above. Below 10⁸ Ω cm a short circuit occurs owing to easy current passage upon application of an electric field.

The thickness of the electrically insulating layer, which depends on the kind or the size of electrically conductive ferromagnetic dispersion particles, is in the range of 0.001 to 10 µm, preferably 0.05 to 3 µm and more preferably 0.1 to 1 µm. Below 0.001 µm, a short circuit easily occurs owing to dielectric breakdown of the electrically insulating layer, whereas above 10 µm it is not preferable since electrorheological effects deteriorate.

Moreover, among magnetic materials of oxide, the magnetic particles of oxide which can provide electrorheological effects can be used as both electric field-and magnetic field-susceptible particles.

Also when an electric field, a magnetic field or both field is applied to a suspension of an electrically insulating fluid and both electric field-and magnetic field-susceptible particles dispersed therein, the viscosity is increased. Also in this case, a bridge of dispersed particles is formed.

Among the composite particles, composite particles obtained by dispersing ferromagnetic particles in a solution of metal alkoxide, for example, tetrabutoxytitanium and conducting a sol-gel reaction in the presence of the ferromagnetic particles, in which metal oxide, e.g., titanium oxide has coated the surfaces of the ferromagnetic particles, are preferable.

The both electric field-and magnetic field-particles preferably have particle sizes of 0.01 to 5,000 µm and more preferably particle sizes of 1.0 to 2,000 µm. When the particle sizes are below 0.01 µm, no more satisfactory improvement of dynamic characteristics, migration characteristics of heat or electric charge or both characteristics can be ensured, whereas above 5,000 µm it is not preferable since the composite obtained becomes brittle.

The species of the matrix having a curing property used in the third and fourth present inventions is the same as described in the above paragraph (1).

The amount of the dispersed particles to the matrix having a curing property is preferably 1 to 99 % by weight, more preferably 3 to 90 % by weight and most preferably 5 to 80 % by weight. When the amount is below 1 % by weight, no effects due to addition of the particles are provided, whereas above 99 % by weight it is not preferable since the matrix becomes brittle.

As a method for curing treatment of the composition comprising the particles stated in the third and fourth present inventions and a matrix having a curing property, for example, a method for curing treatment using a parallel flat plate electrode cell provided around with an electromagnet(s) or a permanent magnet(s) which is capable of enclosing the composition, can be applied. In this case, the direction of magnetic field can be set to a parallel, perpendicular or optional direction to that of electric field by changing the location of the electromagnet or the permanent magnet.

The composition is enclosed in the cell and then the cell is sealed. Then, one member of setting treatment selected from the group consisting of heat curing treatment, phote-curing treatment two-liquid mix curing treatment and catalytic curing treatment is conducted for the composition thus enclosed while applying both an electric field or a magnetic field, whereby the intended composite is produced.

When the matrix having a curing property has a heat curing property, the composition is heated during application of both an electric field and a magnetic field to cure.

Moreover, when the matrix having a property is a two-liquid mix curing type or a catalytic curing type, the composition is prepared by mixing and then immediately enclosed in the cell and then the cell is sealed to apply both an electric field and a magnetic field. Finally, when the curing treatment has been completed, the application of both the electric field and magnetic field is stopped, thus obtaining the intended composite.

When the matrix having a curing property is thermoplastic, the composition is heated to the temperature at which a fluidified state is maintained and enclosed in the cell and then the cell is sealed. After enclosing the composition in the cell and sealing the cell, both an electric field and a magnetic field are applied so that the fluidified state may be maintained. Then, the cell is cooled, and when the composition has become a solid state, the application of both the electric field and magnetic field is stopped, thus obtaining the intended composite.

In the curing treatment, it is preferable to apply both an electric field and a magnetic field simultaneously.

Regarding application conditions of the electric field, an electric field of 50 V/mm to 50 kV/mm, preferably of 100 V/mm to 30 kV/mm is applied. When the electric field is below 50 V/mm, the particles are not aligned and thus improvement of dynamic characteristics, migration characteristics of heat or electric charge or both characteristics cannot be expected, whereas above 50 kV/mm there is a fear causing dielectric breakdown.

Regarding application conditions of magnetic field, a magnetic field of 50 Oe to 20 kOe, preferably 100 Oe to 15 kOe is applied. When the magnetic field is below 50 Oe, the particles are not aligned and thus improvement of dynamic characteristics, migration characteristics or both characteristics cannot be expected, whereas above 20 kOe a magnetic field-susceptible component reaches to saturation magnetization and even when a magnetic field is further increased, the characteristics of the composite are saturated.

In the present invention, it is necessary to conduct heat curing treatment or photo-curing treatment, etc., of the composition comprising the above-mentioned particles of the present invention and a matrix having a curing property while applying both an electric field and a magnetic field to the composition. In the following cases, the composite having excellent dynamic characteristics, migration characteristics or both characteristics of the present invention cannot be obtained.
① Only application treatment of both an electric field and a magnetic field is conducted without conducting heat treatment, photo-treatment, etc.
② Application treatment of both an electric field and a magnetic field is conducted and then heat treatment, or photo-treatment, etc. is conducted.
③ Heat treatment or photo-treatment, etc., is conducted and then application treatment of both an electric field and a magnetic field is conducted.

In order to promote alignment of the electric field-susceptible particles or both electric field- and magnetic field-susceptible particles which occurs by application of an electric field, a small amount of water may be added to the composition. Further, other additives, e.g, amine curing agents, etc., can be used, if necessary.

The composite of the present invention is cured in the state in which the above-mentioned particles of the present invention have been dispersed in a matrix having a curing property or in the state in which a matrix having a curing property has coated surfaces of the above-mentioned particles of the present invention.

It is considered that dynamic characteristics, migration characteristics of heat, electric charge, etc., or both characteristics of the composite of the present invention are improved from the following reason.

That is, electrical deviation, i.e., electrical polarization takes place on the surfaces of the electric field-susceptible particles or both electric field- and magnetic field-susceptible particles by application of an electric field and the particles are aligned by an electrostatic attractive force to form a bridge of the particles and furthermore magnetic polarization of magnetic field-susceptible particles or both electric field-and magnetic field-susceptible particles takes place by application of a magnetic field and the particles are aligned by a magnetic force to form a bridge of the particles.

Although, when a bridge formed by application of only an electric field or only a magnetic field is fixed in the matrix having a curing property, dynamic characteristics, migration characteristics of heat, electric charge, etc., or both characteristics are improved to some extent, the bridge of the particles becomes longer, larger and stronger and dynamic characteristics, migration characteristics or both characteristics are more drastically improved by application of both an electric field and a magnetic field than by application of only an electric field or only a magnetic field.

Moreover, the direction of the bridge of the particles in the composite can be changed by changing optionally the both directions of electric field and magnetic field. Thus, it is considered that anisotropy of dynamic characteristics, migration characteristics or both characteristics of the composite appear.

When the particles are aligned by application of only an electric field or only a magnetic field, development of the bridge structure is poor and the alignment of the particles is simple and functions of anisotropy including intended improvement of dynamic strength, heat, electric charge, magnetism, etc., are not sufficiently provided.

### PREFERRED EMBODIMENTS OF THE INVENTION

Some of the preferred embodiments of the present invention will be described in detail below, referring to Examples, which are not intended to limit the scope of the present invention.

The measuring methods and application apparatuses used in Example and Comparative Examples are as follow:

### [Measuring method for strength]

Strength was measured by a tensile testing machine according to JIS K6911.

### [Measuring method for elastic modulus]

Elastic modulus was measured by a tensile testing machine according to JIS K6911.

### [Measuring method for thermal conductivity]

Thermal conductivity was measured according to JIS R1611.

### [Application apparatus of electric field]

A parallel flat plate electrode cell apparatus was used.

A composite was enclosed in the space of 200 mm length, 200 mm width and 1 mm thickness between positive flat plate electrode cell and negative flat plate electrode cell and then a voltage was applied between the electrode cells.

### [Application apparatus of both electric field and magnetic field]

An apparatus provided with electromagnets in the form of coil outside parallel flat plate cell was used. The direction of magnetic field can be set to a parallel, perpendicular or optional direction to that of electric field by changing the location of the electromagnets. A composite was enclosed in the space of 200 mm length, 30 mm width and 1 mm thickness between the flat plate electrode cells and then both an electric field and a magnetic field were applied.

### Example 1

The composition in a suspension form prepared by mixing 11.2 g of a liquid epoxy resin, a trademark Epicoat 828, produced by Yuka Sheel Epoxy Co., Ltd., 2.8 g of an amino type curing agent and 6 g of titanium oxide was enclosed in a parallel flat electrode cell of 1 mm thickness and then the cell was sealed. Then, the composition was subjected to heat curing treatment at 80 °C for 30 minutes while applying an electric field of 3 kV/mm to the electrodes. After the completion of the heat curing treatment, the application of electric field was stopped and then solidified composite was withdrawn from the cell.

Strength and elastic modulus were measured for the composite (1) thus obtained. The results were shown in Table 1.

### Example 2

The composite (2) was obtained in the same manner as in Example 1 except that carbonaceous particles as electric field-susceptible particles were used instead of titanium oxide. As the carbonaceous particles, surface oxidation-treated pitch particles obtained from petroleum were used.

Strength and elastic modulus were measured for the composite (2) thus obtained. The results were shown in Table 1.

### Comparative Example 1.

The composite (3) was obtained in the same manner as in Example 1 except that no electric field was applied during heat curing treatment.

Strength and elastic modulus were measured the composite (3) thus obtained. The results were shown in Table 1.

### Comparative Example 2

The composite (4) was obtained in the same manner as in Example 2 except that no electric field was applied during heat curing treatment.

Strength and elastic modulus were measured for the composite (4) thus obtained. The results were shown in Table 1.

As clear from Examples 1 to 2 and Comparative Examples 1 to 2, strength and elastic modulus of the composites obtained by conducting curing treatment of curing composition while applying an electric field to the curing composition were larger than those of the composites obtained by conducting curing treatment of curing composition without applying an electric field.

### Example 3

50 g of tetrabutoxytitanium, 10 g of ethanol and 6 g of water were added to a solution containing 25 g of soft magnetic iron particles dispersed in 200 g of xylene with stirring, and then the sol-gel reaction for the production of titanium oxide was conducted at room temperature for 3 hours to coat surfaces of the soft magnetic iron particles with titanium oxide. After the completion of the reaction, the particles were recovered by filtration, and then degasification and drying were carried out for the particles thus recovered at 100 °C /2mmHg for 4 hours, whereby composite particles of titanium oxide and soft magnetic iron particles were obtained. The composite particles contained 67 % by weight of iron.

Then, the composition in a suspension form prepared by mixing 11.2 g of a liquid epoxy resin, a trademark Epicoat 828, produced by Yuka Shell Epoxy Co., Ltd., 2.8 g of an amine type curing agent and 6 g of the above-mentioned composite particles was enclosed in a parallel flat electrode cell of 1 mm thickness and then the cell was sealed. Electromagnets in a coil form were placed at the upper portion and lower portion of the parallel flat electrode cell so that both an electric field and a magnetic field may be applied in parallel with each other to the composition.

Then, the composition was subjected to heat curing treatment at 80 °C for 30 minutes while applying both an electric field of 3 kV/mm and a magnetic field of 1,500 Oe. After the completion of the heat curing treatment, the application of electric field and magnetic field was stopped and then solidified composite (5) was withdrawn from the cell.

Strength and elastic modulus were measured for the composite (5) thus obtained. The results were shown in Table 2.

### Example 4

The composite (6) was obtained in the same manner as in Example 3 except that a magnetic field was applied in the vertical direction (horizontal direction) to an electric field.

Strength and elastic modulus were measured for the composite (6) thus obtained. The results were shown in Table 2.

### Comparative Example 3

The composite (7) was obtained in the same manner as in Example 3 except that only an electric field was applied during heat curing treatment.

Strength and elastic modulus were measured for the composite (7) thus obtained. The results were shown in Table 2.

### Comparative Example 4

The composite (8) was obtained in the same manner as in Example 3 except that only a magnetic field was applied during heat curing treatment.

Strength and elastic modulus were measured for the composite (8) thus obtained. The results were shown in Table 2.

### Comparative Example 5

The composite (9) was obtained in the same manner as in Example 3 except that neither an electric field nor a magnetic field was applied during heat curing treatment.

Strength and elastic modulus was measured for the composite (9) thus obtained. The results were shown in Table 2.

### Example 5

The composite (10) was obtained in the same manner as in Example 4 except that 3 g of carbon particles and 3 g of magnetite were used instead of 6 g of the above-mentioned composite particles. As the carbon particles, surface oxidation-treated pitch particles obtained from petroleum were used.

Strength and elastic modulus were measured for the composite (10) thus obtained.

Further, the composite (10) thus obtained was cut into 1 mm width and then a test piece having 1 mm length, 30 mm width and 1mm thickness was cut.

Thermal conductivity in the parallel direction (thickness direction) to the application direction of electric field was measured for the test piece thus obtained and then thermal conductivity in the parallel direction (horizontal direction) to the application direction of magnetic field was measured for the test piece. The results were shown in Table 3.

### Comparative Example 6

The composite (11) was obtained in the same manner as in Example 5 except that only an electric field was applied during heat curing treatment.

Strength, elastic modulus and thermal conductivity were measured in the same manner as in Example 5. The results were shown in Table 3.

### Comparative Example 7

The composite (12) was obtained in the same manner as in Example 5 except that only a magnetic field was applied during heat curing treatment.

Strength, elastic modulus and thermal conductivity were measured in the same manner as in Example 5. The results were shown in Table 3.

### Comparative Example 8

The composite (13) was obtained in the same manner as in Example 5 except that neither an electric field nor a magnetic was applied during heat curing treatment.

Strength, elastic modulus and thermal conductivity were measured in the same manner as in Example 5. The results were shown in Table 3.

As clear from Examples 3 to 5 and Comparative Examples 3 to 8, strength, elastic modulus, thermal conductivity in the thickness direction and anisotropy of thermal conductivity, i.e., difference of thermal conductivity between the thickness direction and the horizontal direction of the composites obtained by conducting curing treatment of curing composition while applying both an electric field and a magnetic field to the composition were larger than those of the composites obtained by conducting curing treatment of curing composition while applying only an electric field or only a magnetic field, or applying neither an electric field nor a magnetic field.

The composite of the present invention has excellent dynamic characteristics, migration characteristics or both characteristics and is applicable to structure parts in automobiles, airplanes, buildings, various machinery equipments, various electric machines and electric appliances, etc., electronic materials for transducer, piezo-sensor, pyroelectric sensor, thermoelectric elements, etc., superconductive materials and the like and furthermore applicable to various recording media since it is possible to pattern the composite with dispersed particles.

**Table 1**

| Example and Comp.Ex. | Composite | Strength (dyne/cm²) | Elastic modulus (dyne/cm²) |
|---|---|---|---|
| Example 1 | (1) | 5.1× 10⁵ | 1.9× 10⁷ |
| 2 | (2) | 2.9× 10⁵ | 1.1× 10⁷ |
| Comp.Ex.1 | (3) | 6.4× 10⁴ | 3.1× 10⁶ |
| 2 | (4) | 4.9× 10⁴ | 2.4× 10⁶ |

**Table 2**

| Example and Comp.Ex. | Composite | Strength (dyne/cm²) | Elastic modulus (dyne/cm²) |
|---|---|---|---|
| Example 3 | (5) | 8.2× 10⁵ | 4.5× 10⁷ |
| 4 | (6) | 6.7× 10⁵ | 3.3× 10⁷ |
| Comp.Ex.3 | (7) | 5.0× 10⁵ | 2.5× 10⁷ |
| 4 | (8) | 5.3× 10⁵ | 2.6× 10⁷ |
| 5 | (9) | 6.6× 10⁴ | 3.2× 10⁶ |

**Table 3**

| Example and Comparative Example | Composite | Strength (dyne/cm²) | Elastic modulus (dyne/cm²) | Thermal Conductivity (cal/s·cm·°C) | |
|---|---|---|---|---|---|
| | | | | Thickness direction | Horizontal direction |
| Example 5 | (10) | 6.2× 10⁵ | 3.2× 10⁷ | 7.5× 10⁻⁴ | 2.1× 10⁻⁴ |
| Comp.Ex.6 | (11) | 2.4× 10⁵ | 1.2× 10⁷ | 6.9× 10⁻⁴ | 4.6× 10⁻⁴ |
| 7 | (12) | 2.6× 10⁵ | 1.3× 10⁷ | 5.1× 10⁻⁴ | 5.8× 10⁻⁴ |
| 8 | (13) | 6.2× 10⁴ | 2.9× 10⁶ | 5.4× 10⁻⁴ | 5.4× 10⁻⁴ |

## Claims

1. A composite having excellent dynamic characteristics obtainable by conducting curing treatment of a composition comprising electric field-susceptible particles and a matrix having a curing property while applying an electric field to the composition.

2. The composite according to claim 1, wherein the curing treatment is one member of treatment selected from the group consisting of heat curing treatment, photo-curing treatment, two-liquid mix curing treatment and catalytic curing treatment.

3. The composite according to claim 1 or 2, wherein the electric field-susceptible particles are one member selected from the group consisting of titanium oxide and surface oxidation-treated carbonaceous particles.

4. The composite according to any one of the claims 1 to 3, wherein the the electric field-susceptible particles have particle sizes of 0.01 to 5,000 µm.

5. The composite according to any one of the claims 1 to 4, wherein the the amount of the electric field-susceptible particles to the matrix having a curing property is 1 to 99 % by weight.

6. A process for producing a composite having excellent dynamic characteristics which comprises conducting curing treatment of a composition comprising electric field-susceptible particles and a matrix having a curing property while applying an electric field to the composition, and thereby producing the composite.

7. The process according to claim 6, wherein the curing treatment is one member of treatment selected from the group consisting of heat curing treatment, photo-curing treatment, two-liquid mix curing treatment and catalytic curing treatment.

8. The process according to claim 6 or 7, wherein applied electric field is 50 V/mm to 50 kV/mm.

9. The process according to any one of the claims 6 to 8, wherein the electric field-susceptible particles are one member selected from the group consisting of titanium oxide and surface oxidation-treated carbonaceous particles.

10. A composite having excellent dynamic characteristics, migration characteristics or both characteristics obtainable by conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles and a matrix having a curing property while applying both an electric field and a magnetic field to the composition.

11. The composite according to claim 10, wherein the electric field-susceptible particles are particles which electrically polarize in an electric field.

12. The composite according to claim 10 or 11, wherein the magnetic field-susceptible particles are ferromagnetic particles.

13. The composite according to any one of the claims 10 to 12, wherein both electric field- and magnetic field-susceptible particles are composite particles having both a portion electrically polarizing in an electric field and a ferromagnetic portion.

14. A process for producing a composite having excellent dynamic characteristics, migration characteristics or both characteristics which comprises conducting curing treatment of a composition comprising one member of particles selected from the group consisting of (a) electric field-susceptible particles and magnetic field-susceptible particles, (b) both electric field- and magnetic field-susceptible particles, (c) electric field-susceptible particles and both electric field- and magnetic field-susceptible particles, (d) magnetic field-susceptible particles and both electric field- and magnetic field-susceptible particles and (e) electric field-susceptible particles, magnetic field-susceptible particles and both electric field- and magnetic field-susceptible particles and a matrix having a curing property while applying both an electric field and a magnetic field to the composition, and thereby producing the composite.
